# FASCICULE DE BREVET EUROPEEN

(11) **EP 0 807 081 B1**
(45) Date de publication et mention de la délivrance du brevet: **24.03.1999**
(21) Numéro de dépôt: 96901012.3
(22) Date de dépôt: 03.01.1996
(51) Int. Cl.: B65G 1/08, B65G 47/88

(54) **SEPARATEUR DE CHARGES POUR COULOIR DE STOCKAGE DYNAMIQUE**
TRENNVORRICHTUNG FÜR LASTEN IN EINEM DYNAMISCHEN DURCHLAUFSPEICHER
LOAD SEPARATOR FOR A DYNAMIC STORAGE LANE

(30) Priorité: 30.01.1995 FR 9501195
(43) Date de publication de la demande: 19.11.1997
(73) Titulaire: Siparoller, 85000 Mouilleron-le-Captif (FR)
(72) Inventeur: FAISANT, Gilles, F-85180 Château-d'Olonne (FR)
(74) Mandataire: Phélip, Bruno
(86) Numéro de dépôt international: FR9600008
(87) Numéro de publication internationale: WO9623714

(56) Documents cités:
- DE-U- 9 404 684
- US-A- 5 213 189

## Description

La présente invention concerne le domaine général du stockage dynamique de charges du genre palettes, par exemple ; elle concerne plus particulièrement un système de sécurité pour les dispositifs de séparation des charges dans des couloirs de stockage dynamique.

Les installations de stockage dynamique sont constituées de couloirs garnis de galets ou de rouleaux montés parallèlement les uns aux autres sur des longerons formant un bâti qui est incliné de l'amont vers l'aval. Ces galets et/ou rouleaux déterminent un chemin de roulement sur lequel sont posées les charges, généralement des palettes de manutention.

Pour supprimer les problèmes liés à l'extraction des charges qui se trouvent à la partie basse du couloir de stockage, et notamment les problèmes de pression exercée sur la charge d'extrémité par l'accumulation des charges amont, il est courant de prévoir un dispositif de séparation des charges au niveau de l'extrémité aval du couloir. Ce dispositif est adapté pour isoler au moins la première charge, située en aval sur l'installation, par rapport aux autres charges qui sont en attente, en amont, afin de permettre l'extraction de cette première charge tranquillement, sans aucun problème, à l'aide par exemple d'un chariot élévateur.
Ces dispositifs de séparation sont constitués d'une pédale et d'une butée, solidarisées par une tige de liaison en forme de tringle ou de tirant. La pédale est disposée en bout de couloir et elle est destinée à être actionnée par la charge aval ; la butée sert à retenir la ou les charges amont en vue de les séparer de la charge située à l'extrémité aval. Cette butée est placée en position active de retenue par la pédale, lorsque cette dernière est actionnée par la charge d'extrémité aval, et elle est désactivée lors de l'enlèvement de ladite charge aval, pour laisser la charge suivante venir prendre place à l'extrémité du couloir et actionner elle-même la pédale et la butée de retenue pour les autres charges.

En outre, pour offrir plus de sécurité lors de la manipulation de la charge extraite en aval du couloir, il est intéressant de retenir la ou les charges amont, pour laisser du temps à l'opérateur afin qu'il puisse retirer la charge aval sans subir la pression des autres charges qui sont sur le couloir. Dans ce but, les dispositifs de séparation des charges sont généralement équipés de moyens qui permettent d'éviter une désactivation trop rapide de la butée lors de l'enlèvement de la charge aval.

Les documents FR-2 639 331 et DE-GM 7 534 405 décrivent de tels dispositifs séparateurs. Dans ces deux installations, la pédale d'extrémité manoeuvre directement la butée de retenue par l'intermédiaire d'un tirant ou d'une tringle. La butée de retenue est montée à rotation sur un axe d'articulation et elle est soumise à des moyens d'équilibrage autour de cet axe qui tendent, par eux-mêmes, à ramener la pédale en position relevée et à placer ladite butée en position inactive. Ces moyens d'équilibrage permettent une manoeuvre du dispositif séparateur avec un minimum d'effort ; la pédale d'extrémité peut être actionnée par tout type de charge, même des charges très légères.

Le séparateur du document FR-2 639 331 utilise un principe dans lequel le retardement de la manoeuvre de la butée est réalisé par une solidarisation particulière entre la pédale de manoeuvre et la tige de traction. Dans ce cas, le début du mouvement de la pédale, lié à l'extraction de la charge d'extrémité, influe peu sur le mouvement de la butée ; lorsque la pédale arrive en fin de course, son mouvement est intégralement transmis à ladite butée, jusqu'à provoquer sa désactivation.
Dans ce dispositif séparateurs, la butée de retenue est automatiquement désactivée dès l'absence de contact entre la pédale et la charge d'extrémité. Malgré les dispositions adoptées pour retarder cette désactivation, les caractéristiques structurelles de ces mécanismes entraînent une libération assez rapide de la butée.

Dans le document DE-GM 7 534 405, l'arrivée d'une charge à l'extrémité du couloir actionne la butée de retenue disposée en amont, mais également un système de verrouillage de la pédale en position basse. La charge d'extrémité peut être extraite et manoeuvrée sans modifier la position du dispositif de séparation, et donc sans désactiver la butée de retenue. Cette action de désactivation est réalisée par une manoeuvre positive, manuelle ou autre, sur les moyens de verrouillage précités, lorsque l'opérateur désire faire avancer une charge.

On connaît encore d'autres types d'installations qui fonctionnent selon des principes différents.

Le document GB-1 009 128 décrit un couloir de stockage dynamique pour palettes, muni d'un dispositif de séparation des charges constitué d'une pédale d'extrémité qui manoeuvre une butée de retenue par l'intermédiaire d'une tige de traction. Cette tige comporte deux épaulements espacés qui servent, le premier, à l'activation de la butée de retenue par l'intermédiaire d'une genouillère qui en plus verrouille ladite butée en position active, et le second, à sa désactivation. Le second épaulement est adapté pour manoeuvrer la butée de retenue juste lorsque la charge d'extrémité se sépare de la pédale. Cette caractéristique permet de retarder la libération des charges stockées en amont ; l'opérateur dispose ainsi d'un peu plus de temps pour la manoeuvre de la charge en cours de prélèvement.
Comme pour l'objet du document FR-2 639 331, la butée de retenue est automatiquement désactivée dès la perte de contact entre la charge d'extrémité et la pédale, ce qui entraîne une libération somme toute assez rapide de la butée. D'autre part, une genouillère est interposée entre la pédale d'extrémité et la butée de retenue ; le déverrouillage de cette genouillère nécessite une énergie assez importante qui est fournie par un accumulateur en forme de ressort. L'énergie en question est prélevée par l'accumulateur sur les charges en mouvement qui actionnent la pédale d'extrémité, ce qui limite la polyvalence de l'installation en terme de poids des charges. En effet, en fonction de leur vitesse et de leur poids, les petites charges peuvent ne pas avoir une énergie cinétique suffisante pour abaisser la pédale d'extrémité combinée à l'accumulateur d'énergie. Ce système de sécurité n'est pas optimal quelle que soit la charge transportée et il ne présente donc pas un caractère universel.

Le document US-A-5 213 189 présente un dispositif séparateur de charges constitué, comme dans le brevet GB-1 009 128, d'une pédale reliée à la butée de retenue par une tige associée à une genouillère de verrouillage. La pédale est située à l'extrémité aval du couloir et elle est solidaire d'un dispositif de temporisation qui gère la libération de la butée. Ce dispositif de temporisation est constitué d'un vérin du type à fuite contrôlée dont la tige est solidaire de la pédale d'extrémité. Lorsque la pédale est actionnée par une charge, provoquant la mise en position active de la butée de retenue et le verrouillage de la genouillère, elle comprime un système d'accumulateur en forme de ressort et elle ramème le piston du vérin dans une position qui correspond de façon imagée à la remise à zéro du dispositif de temporisation.
Lorsque l'opérateur prélève la charge à l'extrémité aval du couloir, la pédale se relève doucement, indépendamment de la manoeuvre de la charge aval, mais en fonction de la fuite du vérin de temporisation, c'est-à-dire en fonction du mouvement du piston du vérin.
Au terme d'un délai réglé en fonction du débit de fuite du vérin, la tige qui relie la pédale à la butée déverrouille la genouillère, ce qui a pour effet de libérer les charges retenues par ladite butée, permettant à ces dernières d'avancer sur le couloir. La première de ces charges vient se placer sur la pédale pour, à nouveau, provoquer le relevage de la butée de retenue qui arrête les charges amont. Les charges en déplacement sur le couloir, se déplacent, dans la partie aval du couloir, à des vitesses différentes pour permettre cette séparation. Les moyens de séparation des charges par la vitesse ne font pas partie de l'invention.
Dans ce mode de réalisation, l'énergie nécessaire au déverrouillage de la genouillère est prélevée sur l'énergie cinétique des charges mobiles qui arrivent à l'extrémité du couloir. Dans le cas de charges ayant un faible poids, l'énergie cinétique peut se révéler insuffisante pour actionner la pédale, relever la butée de retenue, et mettre sous tension le ou les ressorts formant le système d'accumulateur ; la encore, le dispositif séparateur en question ne présente pas un caractère universel.

L'invention propose de sécuriser les séparateurs de palettes ou de charges qui présentent un caractère universel, c'est-à-dire qui fonctionnent quelles que soient les charges présentes sur le couloir de stockage.

La présente invention a donc pour objet un séparateur de palettes ou de charges pour couloir de stockage dynamique, comprenant une pédale située à l'extrémité aval dudit couloir. Cette pédale est mobile sous l'effet d'une charge pour manoeuvrer par l'intermédiaire d'un tirant, une butée de retenue et de séparation des charges disposées en amont de celle qui agit sur ladite pédale. Ce séparateur comporte également un dispositif de temporisation, en forme de vérin à fuite contrôlée, dont la course de la tige s'étend entre une position de départ de la temporisation et une position de fin de temporisation. Cette temporisation permet de maintenir la butée de retenue en position active pendant un temps suffisant pour assurer l'extraction et la manipulation de la charge aval, sans se soucier de l'arrivée de la charge suivante à l'extrémité du couloir.
Le retard de désactivation peut se situer entre 5 secondes et 3 minutes après l'enlèvement de la charge d'extrémité.

Selon l'invention, le dispositif de temporisation en forme de vérin est disposé de telle sorte qu'il n'entrave pas l'activation de la butée de retenue par la pédale située à l'extrémité aval du couloir, c'est-à-dire que la manoeuvre de ladite butée s'effectue avec un effort minimum.

Selon une forme de réalisation préférée, le dispositif séparateur comprend un vérin de temporisation dont la tige se déplace automatiquement de la position fin de temporisation à la position départ de temporisation, par des moyens intrinsèques audit vérin, du genre ressort.

Selon une autre caractéristique, le vérin amortisseur est du type hydraulique, constitué d'un corps cylindrique renfermant un piston avec lequel est solidarisée une tige qui s'étend en saillie à l'extérieur dudit corps. L'ensemble piston-tige est associé à un ressort de rappel tendant à placer ladite tige en position extraite, et le piston est monté coulissant dans le corps cylindrique, avec un léger jeu adapté pour assurer une fuite d'huile périphérique, fonction de l'amortissement désiré.

De préférence, le piston qui sépare le corps de vérin en deux chambres est traversé par au moins un orifice associé à un clapet d'obturation sélective. Ce clapet est adapté pour obturer le ou lesdits orifices lorsque le piston joue son rôle de temporisateur, et il est adapté pour assurer l'ouverture dudit ou desdits orifices lors du mouvement inverse de retour en position stable.

Selon une autre caractéristique, la tige du vérin s'étend en-dehors du corps cylindrique par l'intermédiaire d'un orifice autour duquel est prévu un collecteur d'huile. Ce collecteur est destiné à la récupération des fuites ou pertes liées à la pénétration de la tige dans le corps cylindrique.

D'autre part, et selon une caractéristique avantageuse supplémentaire, le corps de vérin comporte une portion interne de diamètre plus important au niveau de son extrémité correspondant à la fin de course de temporisation du piston. Cette caractéristique agrandit le jeu entre le corps cylindrique et le piston, en vue de supprimer ou de limiter l'effet d'amortissement dudit piston. Une telle disposition permet d'effacer brusquement la butée à la fin du délai de temporisation, de façon à éviter qu'elle ne vienne accrocher ou 'frotter la face inférieure de la charge dont le déplacement est initié.

Selon une forme de réalisation intéressante, le vérin de temporisation est disposé directement sous la butée de retenue, en appui sur le bâti du couloir.

Encore, selon un mode de réalisation préféré, le dispositif séparateur selon l'invention comporte une butée de retenue montée à rotation sur un axe d'articulation et soumise à des moyens d'équilibrage autour de cet axe qui tendent, par eux-mêmes, à ramener la pédale en position relevée et à placer ladite butée en position inactive. Ces moyens d'équilibrage sont constitués par un bras de manoeuvre prolongeant la butée de retenue. Ce bras de manoeuvre est soumis à l'action permanente d'un ressort d'équilibrage qui tend à désactiver la butée et il est actionné, dans le sens de l'activation de la butée seulement, par un tirant commandé par la pédale d'extrémité.

Selon une autre caractéristique de l'invention, le séparateur comporte un sous-ensemble de verrouillage de la butée dans sa position active de retenue des charges. Le système de verrouillage proprement dit est mis en oeuvre au moyen d'un levier situé en amont de la pédale d'extrémité, à une distance de cette dernière inférieure à la longueur des charges. Ce levier comporte une partie en saillie au-dessus du plan de circulation des charges, qui s'escamote lors du passage d'une charge et qui provoque, d'une part, la précharge d'un organe accumulateur en forme de ressort, dont le rôle est de mettre en oeuvre les moyens de verrouillage de la butée de retenue lorsqu'elle est mise en position active par la pédale d'extrémité et, d'autre part, le chargement d'un second organe accumulateur, en forme de ressort également, dont le rôle est de déverrouiller ladite butée et de remettre le levier dans sa position initiale.

Selon une forme de réalisation préférée, le système de verrouillage est constitué d'une genouillère comprenant deux biellettes interposées entre le bâti du couloir et la butée de retenue. La biellette de la butée comporte un prolongement en forme de patte qui s'étend sous l'articulation de la biellette du bâti. Cette patte sert de guidage à l'extrémité d'une tige sur laquelle est disposé le ressort de mise en oeuvre de ladite genouillère ; cette tige est rappelée par le ressort de déverrouillage ancré sur le bâti.

Selon une autre disposition de l'invention, un vérin de temporisation est interposé entre le bâti du couloir et le levier de commande du système de verrouillage de la butée de retenue. Ce vérin est positionné de façon à temporiser le déverrouillage de la butée de retenue ; il peut être associé à un second vérin de temporisation, disposé directement sous la butée et permettant d'adoucir le mouvement de déverrouillage.

Le dispositif séparateur conforme à la présente invention permet un stockage dynamique en toute sécurité de charges dont le poids est compris entre 50 kg et 1 tonne.

Mais l'invention sera encore illustrée, sans être aucunement limitée, par la description suivante de deux modes de réalisation particuliers, donnés à titre d'exemples et représentés sur les dessins annexés dans lesquels :
- les figures 1a, 1b, 1c et 1d sont des représentations schématiques d'une forme de réalisation possible du dispositif de sécurité selon l'invention, illustrant différentes étapes du fonctionnement ;
- la figure 2 est une vue en coupe du vérin à fuite utilisé à titre d'organe de temporisation ;
- les figures 3a, 3b, 3c et 3d sont des représentations schématiques d'une autre forme de réalisation possible du dispositif séparateur muni d'un système de verrouillage de la butée de retenue, illustrant également différentes étapes du fonctionnement.

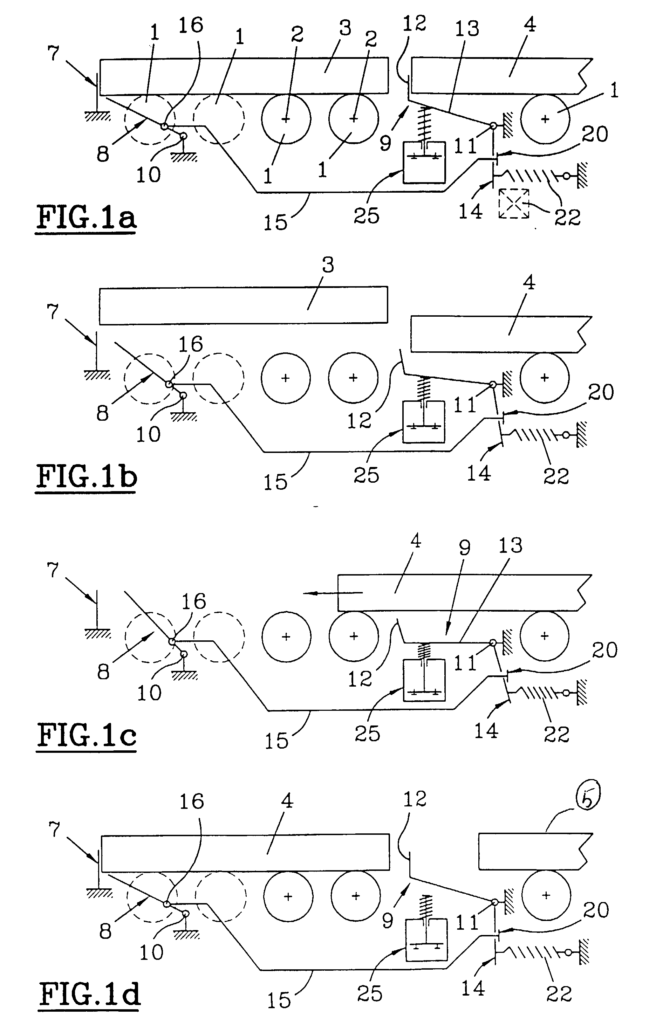

Tel qu'on l'a représenté sur les figures 1a à 1d, le couloir de stockage dynamique est constitué d'une juxtaposition de rouleaux 1 montés libres de rotation sur un axe horizontal 2. Les rouleaux 1 définissent un chemin de roulement en légère pente de l'amont vers l'aval pour le convoyage et le stockage de charges 3, 4, 5 du genre palettes ou caisses.

A l'extrémité basse du couloir de stockage, on remarque la présence d'une butée 7 destinée à retenir la charge la plus en aval.

L'extrémité du couloir de stockage dynamique est également équipée d'un dispositif permettant de séparer la charge la plus en aval des autres charges. Ce dispositif permet l'extraction de cette charge d'extrémité sans être gêné par la poussée des autres charges.

Ce dispositif de séparation est constitué d'une pédale 8 disposée en bout de couloir, et d'une butée mobile 9 adaptée pour retenir la seconde charge ainsi que les charges suivantes, en appui.
La butée de retenue 9 est disposée à une distance de la butée d'extrémité 7 qui est supérieure à la longueur d'une charge.

La pédale 8 est articulée autour d'un axe de rotation 10 ; elle est actionnée par la charge aval. La butée de retenue 9 est articulée autour d'un axe de rotation 11 ; elle se présente sous la forme d'un crochet d'extrémité 12 raccordé audit axe 11 par l'intermédiaire d'un plateau 13. Au-delà de l'axe 11, la butée 9 se prolonge par un bras de manoeuvre 14 soumis à des moyens d'activation et à des moyens de désactivation.

Les moyens d'activation de la butée 9 sont constitués par une tige de traction ou tirant 15 manoeuvré par la pédale d'extrémité 8. Ce tirant 15 est articulé en 16 sur la pédale 8 ; son extrémité amont traverse librement le bras 14 et coopère en traction avec ce dernier par l'intermédiaire d'une butée 20 qui se présente de préférence sous la forme d'une vis réglable. Ainsi, la pédale 8 a une action directe sur la butée 9, par l'intermédiaire du tirant 15 et du bras 14.

Les moyens de désactivation de la butée de retenue 9 consistent en un contrepoids ou en un ressort d'équilibrage 22 qui agit en permanence sur le bras de manoeuvre 14, en sens inverse de l'effet de traction assuré par la tige 15 et sa butée d'extrémité 20. Sur la figure 1a, on a représenté l'option ressort d'équilibrage 22 en traits forts, et l'option contrepoids en pointillés.

Un tel dispositif de séparation est sensiblement équilibré autour de l'axe d'articulation 11 pour tendre à ramener la pédale 8 en position relevée et la butée 9 en position inactive. Ce dispositif permet de placer la butée 9 en position active de retenue par l'action de la pédale d'extrémité 8, lorsque cette dernière est manoeuvrée par la charge aval. Etant donné l'équilibrage, cette manoeuvre est réalisée avec un minimum d'effort. Ainsi, même les charges très légères disposent d'une énergie cinétique suffisante pour mettre en oeuvre le dispositif de séparation, ce qui confère un caractère quasiment universel au couloir de stockage équipé de la sorte.

La butée 9 est désactivée lors de l'enlèvement de la charge aval pour laisser la charge suivante venir prendre place à l'extrémité du couloir. Cette charge actionne alors elle-même la butée de retenue 9 par l'intermédiaire de la pédale 8 et de la tige de traction 15 pour retenir les autres charges. Un tel dispositif de séparation confère à l'opérateur un peu de temps pour l'extraction de la charge d'extrémité avant l'arrivée de la charge suivante.

Pour augmenter la sécurité d'une telle manoeuvre, le dispositif de séparation selon l'invention est équipé de moyens qui permettent de contrôler le mouvement de désactivation de la butée de retenue 9. Ces moyens de contrôle se présentent sous la forme d'un organe de temporisation 25 qui permet de retenir la butée 9 en position active, au-delà du moment où la charge aval cesse d'être en contact avec la pédale d'extrémité 8. Cette temporisation, avant désactivation, est réglée pour conférer à l'opérateur un temps suffisant, fonction de l'installation et du type de charges, pour assurer l'extraction et la manipulation de la charge aval, sans se soucier de l'arrivée de la charge suivante à l'extrémité du couloir.

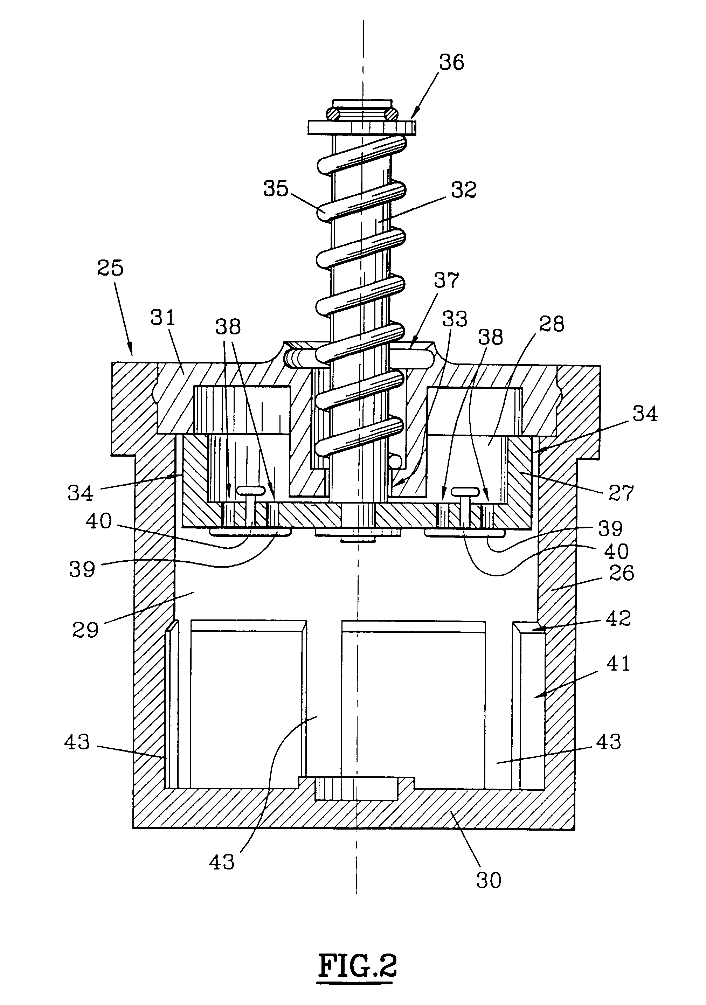

Cet organe de temporisation 25 consiste en un vérin hydraulique du type à fuite qui est disposé sous la butée 9 et qui est détaillé sur la figure 2.

Ce vérin à fuite 25 est constitué d'un corps cylindrique 26 renfermant un piston mobile 27 qui sépare ledit corps cylindrique 26 en deux chambres 28 et 29 remplies ou pratiquement remplies d'huile. Le corps cylindrique 26 est disposé verticalement ; il est ohturé, à sa base, par un fond 30 et en partie supérieure par un couvercle rapporté 31. Le piston 27 porte la tige de vérin 32 qui est centrée sur l'axe du corps cylindrique 26. Cette tige 32 s'étend en saillie en-dehors du corps cylindrique 26 par l'intermédiaire d'un orifice axial 33 réalisé dans le couvercle 31.

Le piston 27 a la possibilité de coulisser axialement dans le corps cylindrique 26 ; il est ajusté dans l'alésage interne du cylindre 26 avec un petit jeu 34 qui permet une légère fuite d'huile périphérique, d'une chambre à l'autre.

La tige axiale 32 et le piston 27 sont assujettis à un ressort hélicoïdal 35 qui est disposé à l'extérieur du corps de vérin 26. Ce ressort 35 est placé autour de la tige 32 ; il prend appui, d'un côté, sur une butée 36 aménagée à l'extrémité extérieure de la tige 32 et, de l'autre côté, contre le couvercle 31, sur le bord de l'orifice axial 33.
Le ressort hélicoïdal 35 constitue un moyen intrinsèque qui tend à placer la tige 32 en position extraite et à ramener le piston 27 dans la partie supérieure du corps cylindrique 26.

Sur le couvercle 31, autour de l'orifice axial 33, on remarque la présence d'une cuvette extérieure 37 qui forme un collecteur d'huile destiné à récupérer les fuites de trop-plein liées à la pénétration de la tige 32 dans le corps cylindrique 26. En effet, lors de l'extraction maximale de la tige 32, les deux chambres 28 et 29 séparées par le piston 27 sont pratiquement remplies d'huile. Lorsque le piston 27 s'abaisse, la tige 32 pénètre progressivement dans le corps cylindrique 26 et son volume crée un trop-plein d'huile qui s'évacue par l'orifice axial 33 et qui est récupéré par le collecteur 37. Au cours de la phase de remontée du piston 27, l'huile évacuée pénètre de nouveau dans le corps de vérin 26 pour remplacer le volume de la tige 32 en cours d'extraction.

Le piston 27 comporte des orifices 38 qui réalisent la connexion entre les deux chambres 28 et 29. Ces orifices 38 sont associés à des clapets d'obturation sélective 39 disposés dans la chambre inférieure 29 et solidarisés avec le piston 27 par l'intermédiaire d'un coulisseau 40. Les clapets 39 obturent les orifices 38 lors de l'abaissement du piston 27, grâce à la pression de l'huile dans la chambre 29 ; la descente du piston 27 est dans ce cas uniquement contrôlée par le jeu périphérique 34. Lorsque le piston 27 remonte, les clapets 39 s'ouvrent et l'huile peut librement passer de la chambre 28 vers la chambre 29 par l'intermédiaire des orifices 38. Le mouvement du piston 27 n'est plus contrôlé par le jeu périphérique 34 et il a la possibilité de remonter plus rapidement. Dans l'exemple de réalisation représenté, deux clapets 39 sont chacun associés à deux orifices 38. Pour assurer la fonction qui vient d'être décrite, un orifice 38 et un clapet 39 peuvent suffire.

Sur la figure 2, on remarque la présence d'une portion interne 41 de diamètre plus important, dans la zone inférieure du corps cylindrique 26. Cette portion 41 est réalisée à partir d'une zone de transition 42 et elle s'étend jusqu'au fond 30. Elle est adaptée pour augmenter le jeu périphérique entre le piston 27 et le cylindre 26 de façon, dans cette zone, à limiter ou supprimer l'effet de contrôle ou d'amortissement du piston 27. Cette particularité sera explicitée plus loin.

A noter la présence de nervures 43 régulièrement réparties sur la périphérie de la portion 41 de diamètre plus important et agencées pour assurer le guidage du piston 27 jusqu'au fond 30.

Différentes étapes du fonctionnement du dispositif de séparation sécurisé selon l'invention sont illustrées sur les figures 1a à 1d.

Sur la figure 1a, on remarque la charge aval 3 qui est bloquée par la butée d'extrémité 7 et qui actionne la pédale 8. Cette dernière tracte la tige 15 qui tire elle-même sur le bras de manoeuvre 14 par l'intermédiaire de la butée 20. La force du ressort de rappel 22 n'est pas suffisante pour contrer le poids de la charge 3 sur la pédale 8 et le crochet 12 de la butée 9 est placé en position active de retenue, au-dessus du chemin de roulement du couloir de stockage dynamique pour bloquer la seconde charge 4 et celles qui la suivent. Le vérin à fuite 25 est disposé sous la butée 9 prenant appui sur le bâti du couloir de stockage ; sa tige 32 est en contact avec le dessous du plateau 13 et le piston 27 est situé dans la partie supérieure du corps cylindrique 26.

Lorsque la charge aval 3 est extraite du couloir de stockage dynamique (figure 1b), la pédale d'extrémité 8 ne lui est plus soumise. Le ressort de rappel 22 joue alors pleinement son rôle en tirant sur le bras de manoeuvre 14. La butée 9 pivote autour de son axe de rotation 11 dans le sens inverse des aiguilles d'une montre et elle entame son mouvement de désactivation ; d'autre part, le bras 14 pousse la butée 20 et manoeuvre la tige de traction 15 dans le sens d'un retour de la pédale 8 en position haute d'attente.

Le vérin à fuite 25 entre pleinement en action dès la perte de contact entre la charge aval 3 et la pédale 8 pour ralentir ou amortir le mouvement de désactivation de la butée 9. Le vérin 25 contrôle la descente de la butée 9 et temporise la désactivation de son crochet d'extrémité 12.
En effet, le ressort de rappel 22 exerce une traction sur le bras de manoeuvre 14 qui provoque une pression du plateau 13 sur l'extrémité de la tige 32 du vérin 25. Le ressort de rappel 35 de ce vérin 25 a une force inférieure à celle du ressort de rappel 22 et la tige 32 s'introduit progressivement dans le corps cylindrique 26 entraînant un mouvement de descente du piston 27. Ce mouvement de descente est contrôlé par le léger jeu périphérique 34 jusqu'à la zone de transition 42. Dans ce mouvement de descente du piston 27, les clapets 39 obturent les orifices 38 ; le jeu périphérique 34 est adapté pour retarder la désactivation de la butée 9 selon un délai désiré, compris entre 5 secondes et 3 minutes, par exemple.

A noter que les délais de temporisation après la perte de contact entre la charge aval 3 et la pédale 8 seront affectés par le temps variable pendant lequel la pédale 8 est toujours en contact avec le dessous de la charge aval 3, dans la phase initiale d'extraction.

Lorsque le piston 27 arrive au niveau de la zone de transition 42, le jeu de fonctionnement 34 augmente brutablement. Le mouvement du piston 27 n'est pratiquement plus amorti et la butée 9 se désactive rapidement. Le moment où la butée 9 se désactive peut correspondre au moment où le piston 27 arrive au niveau de la zone de transition 42 ou au moment où le piston a légèrement dépassé ce niveau. Cette particularité permet d'éviter au crochet 12 d'accrocher le fond de la palette 4, ce qui aurait pour effet, non seulement une possible détérioration du dispositif, mais encore de freiner la palette en cours de séparation.

Lorsque la butée 9 se désactive, son crochet d'extrémité 12 passe sous le niveau du chemin de roulement des charges (figure le). La pédale 8 est relevée au maximum et s'étend au-dessus du chemin de roulement des charges, juste devant la butée d'extrémité 7. La tige 32 et le piston 27 du vérin 25 sont en position basse maximale, maintenue par la pression du plateau 13 liée à l'effet du ressort de rappel 22. La première charge 4 qui était bloquée par la butée 9 se déplace vers l'extrémité du couloir de stockage dynamique ; les charges suivantes peuvent en être séparées au moyen de galets ou de rouleaux freineurs, judicieusement disposés pour limiter leur vitesse.

Lorsque la charge libérée 4 arrive au niveau de la butée d'extrémité 7, la charge suivante 5 n'est pas encore arrivée au niveau de la butée de retenue 9 (figure 1d). Cette charge 4 qui est devenue la charge aval actionne la pédale 8 qui manoeuvre elle-même la butée de retenue 9 par l'intermédiaire de la tige de traction 15. Le crochet 12 est ramené au-dessus du chemin de roulement pour bloquer la charge 5 en cours de déplacement.
La tige 32 du vérin 25 revient progressivement et d'elle-même dans sa position stable extraite grâce au ressort de rappel 35 ; cette remontée est accélérée par l'ouverture des clapets 39.

Dans le mode de réalisation illustré sur les figures 1a à 1d, les moyens d'activation de la butée de retenue 9 (pédale 8, tige de traction 15) sont partiellement désolidarisés des moyens de désactivation (ressort de rappel 22), et l'organe de temporisation 25 est disposé directement sous la butée 9. En conservant le même principe de fonctionnement, dans l'installation décrite ci-avant ou dans le cadre de dispositifs de séparation différents, le système de temporisation en forme de vérin 25 peut être prévu pour coopérer avec tout organe en mouvement (pédale d'extrémité, tige de liaison ou autre...).

Dans tous les cas, le système de temporisation ne doit pas entraver (ou peu) l'activation de la butée de retenue 9 par la pédale 8.

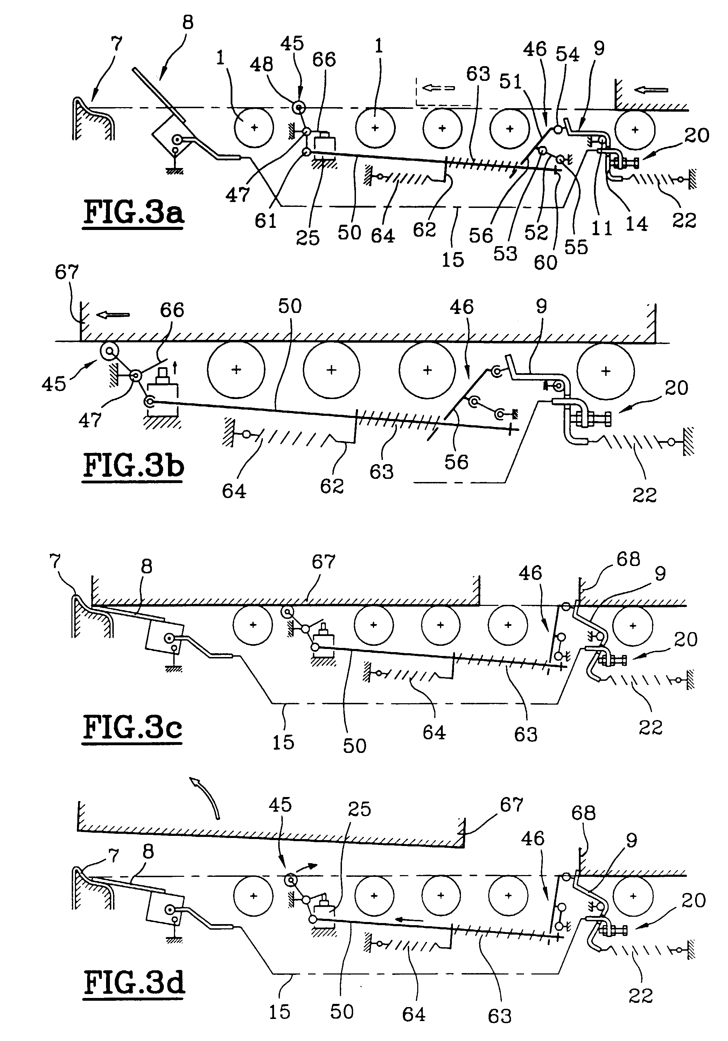

Dans le mode de réalisation des figures 3a à 3d, on a conservé un système de séparation des charges sensiblement équilibré autour de l'axe de rotation de la butée de retenue pour permettre son activation par tout type de charge. Le séparateur en question comporte en outre un système de verrouillage de la butée de retenue pour sécuriser le fonctionnement. Ce système de verrouillage permet d'éviter l'escamotage ou la désactivation de la butée soumise à l'action d'une charge lourde ou ayant une énergie cinétique importante.

Tel qu'on l'a représenté sur les figures 3a à 3d, le dispositif de séparation reprend en partie les mêmes éléments que celui illustré sur les figures 1a à 1d. Ces éléments conservent les mêmes repères pour faciliter la compréhension.

Ainsi, on retrouve le couloir de stockage dynamique, avec la juxtaposition de rouleaux 1 et la butée d'extrémité 7 pour retenir la charge aval. Le dispositif de séparation proprement dit est constitué d'une pédale 8 et d'une butée mobile 9 reliées par le tirant 15. La butée 9 montée sur l'axe d'articulation 11 se prolonge par un bras de manoeuvre 14 qui est soumis à l'action du ressort d'équilibrage 22 et qui est traversé par la tige 15 munie d'une butée 20 en forme de vis réglable.

Le sous-ensemble de verrouillage de la butée 9 est constitué d'un levier 45 qui commande le mouvement d'une genouillère 46 solidarisée avec ladite butée 9. Le levier 45 est articulé en 47 sur le bâti du couloir ; il est situé en amont de la pédale 8, à une distance de celle-ci inférieure à la longueur des charges. Ce levier 45 comporte une partie en saillie qui s'étend au-dessus du plan de circulation des charges et qui est équipée d'un système à galets 48.

Le levier 45 commande le mouvement de la genouillère 46 par l'intermédiaire d'une tige 50.

La genouillère 46 est constituée de deux biellettes 51 et 52 interposées entre le bâti du couloir et la butée de retenue 9. Les deux biellettes 51 et 52 sont solidarisées entre elles par un axe d'articulation 53. L'autre extrémité de la biellette 51 est solidarisée avec la butée 9 au moyen de l'articulation 54 et l'autre extrémité de la biellette 52 est solidarisée avec le bâti du couloir au moyen de l'articulation 55.

La hiellette 51 comporte un prolongement en forme de patte 56 qui sert de guidage à la tige 50 reliée au levier 45. La tige 50 passe à travers un orifice adapté aménagé à l'extrémité de la patte 56 et elle est munie d'une butée réglable d'extrémité 60 ; cette liaison est située sous l'articulation 55 de la biellette 52 sur le bâti. A son autre extrémité, la tige 50 est articulée en 61 sur un prolongement du levier 45.

Entre ses deux extrémités, la tige 50 reçoit une équerre soudée 62. Cette équerre 62 sert de butée à un premier organe accumulateur 63, en forme de ressort, qui est monté sur la tige 50 et dont l'autre extrémité est en appui contre la patte 56. Cette équerre 62 sert également d'ancrage à un second organe accumulateur 64 dont l'autre extrémité est solidarisée avec le bâti du couloir.

Le ressort 63 sert au verrouillage de la genouillère 46. En position repos (genouillère 46 désactivée) ce ressort 63 est avantageusement légèrement comprimé entre l'équerre 62 et la patte
56. La raideur du ressort 63 peut être voisine de 0,8 Newton/mm.
Le ressort 64 agit en traction sur la tige 50 ; il sert au déverrouillage de la genouillère 46 et à la remise en position active du levier 45. En position de genouillère désactivée, le ressort 64 peut être légèrement bandé. La raideur du ressort 64 peut être voisine de 1,25 Newton/mm.

A proximité du levier de commande 45 on remarque la présence d'un vérin de temporisation 25 identique à celui illustré sur la figure 2. Cette temporisation 25 est fixée sur le bâti du couloir et sa tige est en contact avec une patte de manoeuvre 66 solidaire du levier 45.

Le fonctionnement du sous-ensemble de verrouillage va maintenant être illustré en liaison avec différentes étapes illustrées sur les figures 3a à 3d.

Sur la figure 3a, le dispositif séparateur et le sous-ensemble de verrouillage sont en position inactive. La pédale 8 et le levier 45 s'étendent au-dessus du plan de déplacement des charges. La butée de retenue 9 est disposée sous le plan de déplacement pour permettre aux charges de se déplacer jusqu'à l'extrémité du couloir.

Lorsqu'une charge 67 arrive au niveau de l'extrémité aval du couloir de stockage dynamique, elle provoque l'escamotage du levier 45 (figure 3b).

Le levier 45 pivote autour de son axe d'articulation 47 ce qui entraîne un déplacement de la tige 50 vers l'amont du couloir, ainsi que le relèvement de la patte 66. Le mouvement de la tige 50 provoque la charge des accumulateurs d'énergie 63 et 64, en compression pour le ressort 63 et en étirement pour le ressort 64. Le ressort 63 exerce un effort sur le jeu de bielles 51 et 52.

Etant donné la configuration structurelle de la genouillère 46 et de la butée de retenue 9, avec son ressort d'équilibrage 22, la poussée du ressort 63 est insuffisante pour actionner la patte 56 qui forme levier.
D'autre part, le levier 45 étant en position basse, la patte 66 libère la tige 32 du vérin de temporisation
25. Cette tige 32 s'extrait d'elle-même du corps cylindrique 26 sous l'effet du ressort 35 pour se positionner en départ de temporisation.

La charge 67 poursuit sa course jusqu'à la butée d'extrémité 7 (figure 3c) au niveau de laquelle elle actionne la pédale 8 pour mettre la butée de retenue 9 en position active de blocage des charges amont 68. Le relevage de la butée 9 s'accompagne d'un mouvement de la genouillère 46 aidé en cela par le ressort 63 qui restitue l'énergie accumulée.
Les deux biellettes 51 et 52 s'écartent pour se positionner sensiblement dans le prolongement l'une de l'autre, voire même un peu au-delà, pour obtenir un verrouillage efficace du positionnement de la butée 9. Le ressort 63 préchargé pousse sur le bras de levier 56 afin d'aider et de compléter ce mouvement de verrouillage. Comme ce mouvement est réalisé à vide, c'est-à-dire sans effort sur la butée 9, il s'effectue sans entrave et ne nécessite pas une énergie trop importante.

La genouillère 46 verrouille de façon efficace la butée de retenue 9 ; ce verrouillage est adapté à l'effort maximum susceptible d'être appliqué par la juxtaposition des différentes charges 68.
Lorsque la charge aval 67 est enlevée du couloir de stockage dynamique (figure 3d) le ressort 64 agit en traction sur la tige 50 dans le sens du déverrouillage de la genouillère 46. Ce déverrouillage est temporisé par l'action du vérin 25 qui retient le mouvement de la patte 66. Il agit à pleine charge et il est facilité par la démultiplication des efforts obtenue grâce au bras de levier 56.
En fin de temporisation, le ressort 64 déverrouille complètement la genouillère 46 et la butée de retenue 9 s'escamote par l'action du ressort d'équilibrage 22. D'autre part, la pédale 8 et le levier 45 se repositionnent au-dessus du plan de stockage des charges.
La nouvelle charge la plus en aval, peut se déplacer jusqu'à l'extrémité du couloir et un nouveau cycle de séparation recommence.

## Revendications

1. Séparateur de palettes ou charges, dans un couloir de stockage dynamique, comprenant une pédale (8) située à l'extrémité aval dudit couloir, laquelle pédale (8) est mobile sous l'effet d'une charge pour manoeuvrer, par l'intermédiaire d'un tirant (15), une butée (9) de retenue et de séparation des charges qui sont disposées en amont de celle qui agit sur ladite pédale (8), lequel séparateur comporte un dispositif de temporisation en forme de vérin du type à fuite contrôlée dont la course de la tige (32) s'étend entre une position de départ de la temporisation et une position de fin de temporisation, lequel vérin (25) est adapté pour maintenir la butée de retenue (9) en position active pendant un temps suffisant pour assurer l'extraction et la manipulation de la charge aval, sans se soucier de l'arrivée de la charge suivante à l'extrémité du couloir, caractérisé en ce que ledit dispositif de temporisation est disposé de telle sorte qu'il n'entrave pas l'activation de la butée de retenue par ladite pédale (8), c'est-à-dire que la manoeuvre de ladite butée s'effectue avec un effort minimum.

2. Séparateur selon la revendication 1, caractérisé en ce qu'il comporte un vérin de temporisation (25) dont la tige (32) se déplace automatiquement de la position fin de temporisation à la position départ de temporisation, par des moyens intrinsèques audit vérin, du genre ressort (35).

3. Séparateur selon l'une quelconque des revendications 1 ou 2, caractérisé en ce qu'il comporte un vérin amortisseur hydraulique (25) constitué d'un corps cylindrique (26) renfermant un piston (27) avec lequel est solidarisée une tige (32) qui s'étend en saillie à l'extérieur dudit corps (26), l'ensemble piston (27)-tige (32) étant associé à un ressort de rappel (35) tendant à placer la tige (32) en position extraite, et en ce que le piston (27) est monté coulissant dans le corps cylindrique (26) avec un léger jeu (34) adapté pour assurer une fuite d'huile périphérique fonction de l'amortissement désiré.

4. Séparateur selon la revendication 3, caractérisé en ce que le piston (27) qui sépare le corps de vérin (26) en deux chambres (28) et (29) est traversé par au moins un orifice (38) associé à un clapet d'obturattion sélective (39), lequel clapet (39) est adapté pour obturer le ou lesdits orifices (38) lorsque le piston (27) joue son rôle de temporisateur et lequel clapet (39) est adapté pour assurer l'ouverture dudit ou desdits orifices (38) lors du mouvement inverse de retour en position stable.

5. Séparateur selon l'une quelconque des revendications 3 ou 4, caractérisé en ce que la tige (32) du vérin (25) s'étend en-dehors du corps cylindrique (26) par l'intermédiaire d'un orifice (33) autour duquel est prévu un collecteur d'huile (37) destiné à la récupération des fuites ou pertes liées à la pénétration de la tige (32) dans le corps cylindrique (26).

6. Séparateur selon l'une quelconque des revendications 3 à 5, caractérisé en ce que le corps cylindrique (26) du vérin (25) comporte une portion interne (41) de diamètre plus important, au niveau de son extrémité correspondant à la fin de course de temporisation du piston (27), laquelle portion (41) permet d'agrandir le jeu entre ledit corps cylindrique (26) et ledit piston (27) en vue de supprimer ou de limiter l'effet d'amortissement dudit piston (27).

7. Séparateur selon l'une quelconque des revendications 1 à 6, caractérisé en ce que le vérin de temporisation (25) est disposé directement sous la butée de retenue (9), en appui sur le bâti du couloir.

8. Séparateur selon l'une quelconque des revendications 1 à 7, caractérisé en ce qu'il comporte une butée de retenue (9) montée à rotation sur un axe d'articulation (11) et soumise à des moyens d'équilibrage autour de cet axe (1l) qui tendent, par eux-mêmes, à ramener la pédale (8) en position relevée et à placer ladite butée (9) en position inactive, lesquels moyens d'équilibrage sont constitués par un bras de manoeuvre (14) prolongeant la butée de retenue (9), lequel bras de manoeuvre est soumis à l'action permanente d'un ressort d'équilibrage (22) tendant à désactiver ladite butée (9) et lequel bras de manoeuvre (14) est actionné, dans le sens de l'activation de la butée (9), par un tirant (15) commandé par la pédale d'extrémité (8).

9. Séparateur selon l'une quelconque des revendications 1 à 8, caractérisé en ce qu'il comporte un sous-ensemble de verrouillage de la butée (9) dans sa position active de retenue des charges, le système de verrouillage proprement dit étant mis en oeuvre au moyen d'un levier (45) situé en amont de la pédale d'extrémité (8), à une distance de cette dernière inférieure à la longueur des charges, lequel levier (45) comporte une partie en saillie, au-dessus du plan de circulation des charges, qui s'escamote lors du passage d'une charge et qui provoque, d'une part, la précharge d'un organe accumulateur en forme de ressort (63) dont le rôle est de mettre en oeuvre les moyens de verrouillage de la butée de retenue (9) lorsqu'elle est mise en position active par la pédale d'extrémité (8) et, d'autre part, le chargement d'un second organe accumulateur (64), en forme de ressort également, dont le rôle est de déverrouiller ladite butée (9) et de remettre le levier (45) dans sa position initiale.

10. Séparateur selon la revendication 9, caractérisé en ce que le système de verrouillage est constitué d'une genouillère (46) comprenant deux biellettes (51, 52) interposées entre le bâti du couloir et la butée de retenue (9), la biellette (51) de la butée (9) comportant un prolongement (56) en forme de patte qui s'étend sous l'articulation (55) de la biellette (52) du bâti, laquelle patte (56) sert de guidage à l'extrémité d'une tige (50) sur laquelle est disposé le ressort (63) de mise en oeuvre de ladite genouillère (46), laquelle tige (50) est rappelée par le ressort de déverrouillage (64) ancré sur le bâti du couloir de stockage.

11. Séparateur selon l'une quelconque des revendications 9 ou 10, caractérisé en ce qu'il comporte un vérin de temporisation (25) interposé entre le bâti du couloir et le levier (45) de commande du système de verrouillage (46) de la butée de retenue (9), lequel vérin (25) est positionné de façon à temporiser le déverrouillage de ladite butée (9).

## Patentansprüche

1. Paletten- oder Lastentrenner in einer dynamischen Lagerrutsche, umfassend ein Pedal (8), das am nachlaufseitigen Ende der Rutsche angeordnet ist, wobei dieses Pedal (8) unter der Einwirkung einer Last beweglich ist, um mit Hilfe eines Zugstabes (15) einen Anschlag (9) zum Halten und Trennen der Lasten zu betätigen, die im Vorlaufbereich jener Last angeordnet sind, die auf das Pedal (8) einwirkt, wobei der Trenner eine Verzögerungsvorrichtung in Form eines Zylinders vom Typ mit kontrolliertem Verlust umfaßt, dessen Stangenhub (32) sich zwischen einer Ausgangsposition der Verzögerung und einer Endposition der Verzögerung erstreckt, wobei dieser Zylinder (25) derart ausgeführt ist, daß er den Halteanschlag (9) während einer ausreichenden Zeit in aktiver Position hält, um die Entnahme und die Beförderung der nachlaufseitigen Last zu gewährleisten, ohne sich über die Ankunft der folgenden Last am Ende der Rutsche Sorgen zu machen, dadurch gekennzeichnet, daß die Verzögerungsvorrichtung derart angeordnet ist, daß sie die Aktivierung des Halteanschlags durch das Pedal (8) nicht behindert, d.h. daß die Betätigung dieses Anschlags mit minimaler Kraft erfolgt.

2. Trenner nach Anspruch 1, dadurch gekennzeichnet, daß er einen Verzögerungszylinder (25) umfaßt, dessen Stange (32) sich automatisch von der Position Verzögerungsende in die Position Verzögerungsanfang durch in dem Zylinder befindliche Mittel der Federart (35) verschiebt.

3. Trenner nach einem der Ansprüche 1 oder 2, dadurch gekennzeichnet, daß er einen hydraulischen Dämpfungszylinder (25) umfaßt, der von einem zylindrischen Körper (26) gebildet ist, der einen Kolben (27) umfaßt, mit dem eine Stange (32) verbunden ist, die sich vorspringend außerhalb des Körpers (26) erstreckt, wobei die Einheit Kolben (27) - Stange (32) mit einer Rückstellfeder (35) verbunden ist, die dazu neigt, die Stange (32) in der Entnahmeposition anzuordnen, und dadurch, daß der Kolben (27) gleitbar in dem zylindrischen Körper (26) mit einem leichten Spiel (34) montiert ist, das derart beschaffen ist, daß ein peripherer Ölverlust in Abhängigkeit von der gewünschten Dämpfung gewährleistet wird.

4. Trenner nach Anspruch 3, dadurch gekennzeichnet, daß durch den Kolben (27), der den Zylinderkörper (26) in zwei Kammern (28) und (29) trennt, mindestens eine Öffnung (38) verläuft, die mit einer selektiven Verschlußklappe (39) verbunden ist, wobei die Klappe (39) derart ausgeführt ist, daß sie die Öffnung(en) (38) verschließt, wenn der Kolben (27) seine Verzögerungsrolle spielt, und wobei diese Klappe (39) derart ausgeführt ist, daß sie das Öffen der Öffnung(en) (38) bei der umgekehrten Bewegung zurück in die stabile Position gewährleistet.

5. Trenner nach einem der Ansprüche 3 oder 4, dadurch gekennzeichnet, daß sich die Stange (32) des Zylinders (25) über den zylindrischen Körper (26) hinaus mit Hilfe einer Öffnung (33) erstreckt, um die ein Ölsammler (37) vorgesehen ist, der dazu bestimmt ist, Leckagen oder Verluste, die mit dem Eindringen der Stange (32) in den zylindrischen Körper (26) verbunden sind, aufzunehmen.

6. Trenner nach einem der Ansprüche 3 bis 5, dadurch gekennzeichnet, daß der zylindrische Körper (26) des Zylinders (25) einen inneren Abschnitt (26) mit einem größeren Durchmesser im Bereich seines Endes, das dem Verzögerungsanschlag des Kolbens (41) entspricht, umfaßt, wobei es dieser Abschnitt (41) ermöglicht, das Spiel zwischen dem zylindrischen Körper (26) und dem Kolben (27) zu vergrößern, um die Dämpfungswirkung des Kolbens (27) zu unterbinden oder zu begrenzen.

7. Trenner nach einem der Ansprüche 1 bis 6, dadurch gekennzeichnet, daß der Verzögerungszylinder (25) direkt unter dem Halteanschlag (9) auf dem Gehäuse der Rutsche aufliegend angeordnet ist.

8. Trenner nach einem der Ansprüche 1 bis 7, dadurch gekennzeichnet, daß er einen Halteanschlag (9) umfaßt, der drehbar auf einer Gelenkachse (11) montiert ist und Ausgleichsmitteln um diese Achse (11) unterworfen ist, die von sich selbst dazu neigen, das Pedal (8) in die angehobene Position zu bringen und den Anschlag (9) in die inaktive Position zu stellen, wobei diese Ausgleichsmittel von einem Betätigungsarm (14) gebildet sind, der den Halteanschlag (9) verlängert, wobei dieser Betätigungsarm der ständigen Wirkung einer Ausgleichsfeder (22) unterworfen ist, die dazu neigt, den Anschlag (9) zu deaktivieren, und wobei dieser Betätigungsarm (14) in die Richtung der Aktivierung des Anschlags (9) durch eine Zugstange (15) betätigt wird, die von dem Endpedal (8) gesteuert wird.

9. Trenner nach einem der Ansprüche 1 bis 8, dadurch gekennzeichnet, daß er eine Untereinheit zur Verriegelung des Anschlags (9) in seiner aktiven Position zum Halten der Lasten umfaßt, wobei das eigentliche Verriegelungssystem mit Hilfe eines Hebels (45) verwirklicht ist, der im Vorlaufbereich des Endpedals (8) in einem Abstand zu diesem, der kleiner als die Länge der Lasten ist, angeordnet ist, wobei dieser Hebel (45) einen über die Umlaufebene der Lasten hinaus vorspringenden Teil umfaßt, der sich bei dem Durchgang einer Last einzieht und der einerseits die Vorbelastung eines Speichergliedes in Form einer Feder (63), deren Rolle im Einsatz der Verriegelungsmittel des Halteanschlags (9) besteht, wenn er von dem Endpedal (8) in die aktive Position gebracht wird, und andereseits die Belastung eines zweiten Speichergliedes (64), ebenfalls in Form einer Feder, bewirkt, deren Rolle die Entriegelung des Anschlags (9) und die Rückstellung des Hebels (45) in seine Anfangsposition ist.

10. Trenner nach Anspruch 9, dadurch gekennzeichnet, daß das Verriegelungssystem von einem Kniegelenk (46) gebildet ist, das zwei Schwingarme (51, 52) umfaßt, die zwischen dem Gehäuse der Rutsche und dem Halteanschlag (9) angeordnet sind, wobei der Schwingarm (51) des Anschlags (9) eine Verlängerung (56) in Form eines Befestigungseisens umfaßt, das sich unter dem Gelenk (55) des Schwingarmes (52) des Gehäuses erstreckt, wobei dieses Befestigungseisen (56) als Führung für das Ende einer Stange (50) dient, auf der die Feder (63) für den Einsatz des Kniegelenks (46) angeordnet ist, wobei diese Stange (50) durch die Entriegelungsfeder (64), die auf dem Gehäuse der Lagerrutsche befestigt ist, rückgestellt wird.

11. Trenner nach einem der Ansprüche 9 oder 10, dadurch gekennzeichnet, daß er einen verzögerungszylinder (25) umfaßt, der zwischen dem Gehäuse der Rutsche und dem Hebel (45) zur Steuerung des Verriegelungssystems (46) des Halteanschlags (9) angeordnet ist, wobei dieser Zylinder (25) derart angeordnet ist, daß er die Entriegelung des Anschlags (9) verzögert.

## Claims

1. A pallet or load separator in a dynamic storage chute, comprising a pedal (8) located at the downstream end of the said chute, whereas the said pedal (8) is moveable under the effect of a load to manoeuvre, via a tie-rod (15), a retaining and separation stop (9) of the loads arranged upstream of that acting onto the said pedal (8), whereas the said separator comprises a delay device in the form of controlled leak type jack whose rod's (32) stroke extends from a delay start position and a delay end position, whereby the said jack (25) is suited to maintain the retaining stop (9) in active position for a sufficient time to ensure removing and handling of the downstream load, without worrying about the arrival of the next load at the end of the chute, characterised in that the said delay device is arranged in such a way that it does not interfere with the actuation of the retaining stop by the said pedal (8), i.e. the manoeuvre of the said stop is performed with minimum encumbrance.

2. A separator according to claim 1, characterised in that it comprises a delay jack (25) whose rod (32) moves atomatically from the delay end position to the delay start position, via means inherent to the said jack, such as spring-loaded means (35).

3. A separator according to any one of claims 1 or 2, characterised in that it comprises a hydraulic dampening jack (25) constitued of a cylindrical body (26) enclosing a plunger (27) with which a rod (32) is interconnected, protruding outside the said body (26), whereas the plunger (27)/rod (32) assembly is associated with a feed back spring (35) tending to bring the said rod (32) into extracted position and in that the plunger (27) is slidably mounted in the cylindrical body (26), with a slight clearance (34) to ensure peripheral oil leak, in relation to the requested dampening effect.

4. A separator according to claim 3, characterised in that the plunger (27) which separates the jack body (26) into two chambers (28) and (29) comprises at least one traversing orifice (38) associated with a selective closing valve (39), whereby this valve (39) is adapted to close the said orifice(s) (38) when the plunger (27) acts as a delay member and when the said valve (39) is adapted to ensure the opening of the said orifice(s) (38) during reverse motion, back into stable position.

5. A separator according to any one of claims 3 to 4, characterised in that the rod (32) of the jack (25) extends outside the cylindrical body (26) via an orifice (33) around which an oil collector (37) has been arranged, designed for the collection of leaks or losses associated with the penetration of the rod (32) in the cylindrical body (26).

6. A separator according to any one of claims 3 to 5, characterised in that the cylindrical body (26) of the jack (25) comprises an inner portion (41) of larger diameter, at the level of its end corresponding to the end of the stroke of the delay plunger (27) ; whereas the said portion (41) enables to increase the clearance between the cylindrical body (26) and the said plunger (27) in order to suppress or limit the dampening effect of the said plunger (27).

7. A separator according to any one of claims 1 to 6, characterised in that delay jack (25) is arranged directly under the retaining stop (9), bearing against the frame of the chute.

8. A separator according to any one of claims 1 to 7, characterised in that it comprises a retaining stop (9) rotatably mounted on an articulation axis (11) and subject to balancing means around the said axis (11) which tend, by themselves, to bring the pedal (8) back into raised position and to put the said stop (9) in inactive position, whereas these balancing means are made of a manoeuvring arm (14) following the retaining stop (9), the said manoeuvring arm is subject to the permanent action of a balancing spring (22) tending to de-actuate the said stop (9) and the said manoeuvring arm (14) is actuated, in actuation direction of the stop (9), by a tie-rod (15) controlled by the end pedal (8).

9. A separator according to any one of claims 1 to 8, characterised in that it comprises a sub-assembly for locking the stop (9) in its action position for retaining loads, the locking system properly speaking being implemented by a lever (45) situated upstream of the end pedal (8), at a distance from the latter smaller than the length of the loads, the said lever (45) comprises a section protruding above the circulation plane of the loads, retractable at the passage of a load and causing, on the one hand, a spring-loaded accumulator member (63) to the pre-loaded, whose role consists in implementing the locking means of the said retaining stop (9) when it is set into active position by the end pedal (8) and, on the other hand, the loading of a second accumulator member (64), also spring-loaded, whose role consists in unlocking the said stop (9) and to bring the lever (45) back to its home position.

10. A separator according to claim 9, characterised in that the locking system is constitued of a toggle joint (46) comprising two rocker bars (51, 52) interposed between the chute's frame and the retaining stop (9), the rocker bar (51) of the stop (9) comprising a lug-shaped extension (56) extending beneath the articulation (55) of the frame's rocker bar (52), whereas the said lug (56) serves as a guide to the end of a rod (50) on which is arranged the implementation spring (63) of the said toggle joint (46), the said rod (50) is moved back by the unlocking spring (64) anchored on the frame of the storage chute.

11. A separator according to any one of claims 9 or 10, characterised in that it comprises a delay jack (25) interposed between the chute's frame and the control lever (45) of the locking means (46) of the retaining stop (9), whereas the said jack (25) is placed in order to delay the unlocking of the retaining stop (9).
